# EUROPEAN PATENT SPECIFICATION

(11) **EP 0 942 571 B1**
(45) Date of publication and mention of the grant of the patent: **24.05.2006**
(21) Application number: 98850035.1
(22) Date of filing: 13.03.1998
(51) Int. Cl.: H04M 1/72, H04M 1/65

(54) **Communication device and method of operation**
Kommunikationsgerät und Betriebsverfahren
Appareil de communication et méthode d'exploitation

(43) Date of publication of application: 15.09.1999
(73) Proprietor: TELEFONAKTIEBOLAGET LM ERICSSON (publ), 164 83 Stockholm (SE)
(72) Inventor: Mekuria, Fisseha, 224 72 Lund (SE); Cavander, Hans Fredrik, 245 44 Staffanstorp (SE); Ljungberg, Per, 222 37 Lund (SE)
(74) Representative: Onshage, Anders Christer

(56) References cited:
- EP-A- 0 700 192
- EP-A- 0 725 499
- EP-A- 0 762 711
- WO-A-95/34984
- WO-A-96/19069
- PATENT ABSTRACTS OF JAPAN vol. 098, no. 005, 30 April 1998 & JP 10 013243 A (KOKUSAI ELECTRIC CO LTD), 16 January 1998

## Description

### TECHNICAL FIELD OF INVENTION

The invention relates to communication devices and, in particular, to communication devices being able to read-out and, possibly, store voice messages in a memory. The invention also relates to methods for retrieving and, possibly, storing voice messages in such devices.

### DESCRIPTION OF RELATED ART

A communication device adapted to receiving and transmitting audio signals is often equipped with a speech encoder and a speech decoder. The purpose of the encoder is to compress an audio signal which has been picked-up by a microphone. The speech encoder provides a signal in accordance with a speech encoding format. By compressing the audio signal the bandwidth of the signal is reduced and, consequently, the bandwidth requirement of a transmission channel for transmitting the signal is also reduced. The speech decoder performs substantially the inverse function of the speech encoder. A received signal, coded in the speech encoding format, is passed through the speech decoder and an audio signal, which is later outputted by a loudspeaker, is thereby recreated.

One known form of a communication device being able to read-out and store voice messages in a memory is discussed in the U.S. patent no. 5,499,286 by Kobayashi. A voice message is stored in the memory as data coded in the speech encoding format. The speech decoder of the communication device is used to decode the stored data and thereby recreating an audio signal of the stored voice message. Likewise, the speech encoder is used to encode a voice message, picked up by the microphone, and providing data coded in the speech encoding format. This data is then stored in the memory as a representation of the voice message.

The U.S. patent no. 5,630,205 by Ekelund, the European Patent Application EP-A-0 725 499 by Maeda et al., and the International Patent Application WO 96/19069 (Coad et al.) illustrate similar designs.

EP 0 700 192 A1 discloses a sound recorder having a memory for recording digital sound samples, means for compressing digital incoming samples using a lower compression rate as well as means for reading from the memory samples that have previously been entered so that they are compressed once again, this time at a higher compression rate.

Whilst the known communication device described above functions quite adequately, it does have a number of disadvantages.

A drawback of the known communication device is that although the speech encoder and speech decoder allow message data to be stored in a memory in a relatively compressed format, a large memory is still needed. Memory is expensive and is often, especially in small hand-held communication devices, such as cellular phones or mobile phones, a scarce resource.

An example of a speech encoding/decoding algorithm is defined in the GSM (Global System for Mobile communications) standard where a residual pulse excited long term prediction, RPE-LTP coding algorithm is used. This algorithm, which is referred to as a full-rate speech coder algorithm, provides a compressed data rate of about 13 kbit/s. The memory requirement for storing voice messages is thereby relatively high. The computation power needed for performing the full-rate speech coding algorithm is, however, relatively low (about 2 MIPS). The GSM standard also includes a half-rate speech coder algorithm which provides a compressed data rate of about 5.6 kbit/s. Although this means that the memory requirement for storing voice messages is lower than what is required when the full-rate speech coding algorithm is used, the half-rate speech code algorithm does require a lot of computation power (about 16 MIPS). Computation power is expensive to implement and is often, especially in small hand-held communication devices, such as cellular phones or mobile phones, a scarce resource. Furthermore, a circuit for carrying out a high degree of computation power also consumes a lot of electrical power, which adversely affect the battery life-length in battery powered communication devices.

It is an object of the present invention to provide a communication device which overcomes or alleviates the above mentioned problems.

The invention is also directed to a method by which the described device operates.

### SUMMARY

The present invention is defined in the independent claims 1 and 24. Advantageous embodiments are given in the dependent claims.

This construction and method achieve the advantage that a voice message is stored in the memory in a more compressed format than the format provided by a speech encoder. Such a stored voice message is decompressed by the decompression means thereby recreating an encoded voice signal coded in the speech encoding format, i.e. the format provided after a voice signal has passed a speech encoder.

Since a voice message is stored in the memory in a more compressed format than the format provided by a speech encoder, as is the case in the prior art, less memory is required to store a particular voice message. A smaller memory can therefore be used. Alternatively, a longer voice message can be stored in a particular memory. Consequently, the communication device of the present invention requires less memory and, hence, is cheaper to implement. In, for example, small hand-held communication devices, where memory is a scarce resource, the smaller amount of memory required provides obvious advantages. Furthermore, a small amount of computation power is required due to the fact that simple decompression algorithms can be used by the decompression means.

### BRIEF DESCRIPTION OF THE DRAWINGS

FIG 1 illustrates a block diagram of a communication device in accordance with a first embodiment of the present invention;
FIG 2 illustrates a block diagram of a communication device in accordance with a second embodiment of the present invention;
FIG 3 illustrates a block diagram of a communication device in accordance with a third embodiment of the present invention;
FIG 4 illustrates a block diagram of a communication device in accordance with a fourth embodiment of the present invention.

### DETAILED DESCRIPTION OF EMBODIMENTS

Embodiments of the present invention are described below, by way of example only. The block diagrams illustrate functional blocks and their principle interconnections and should not be mistaken for illustrating specific implementations of the present invention.

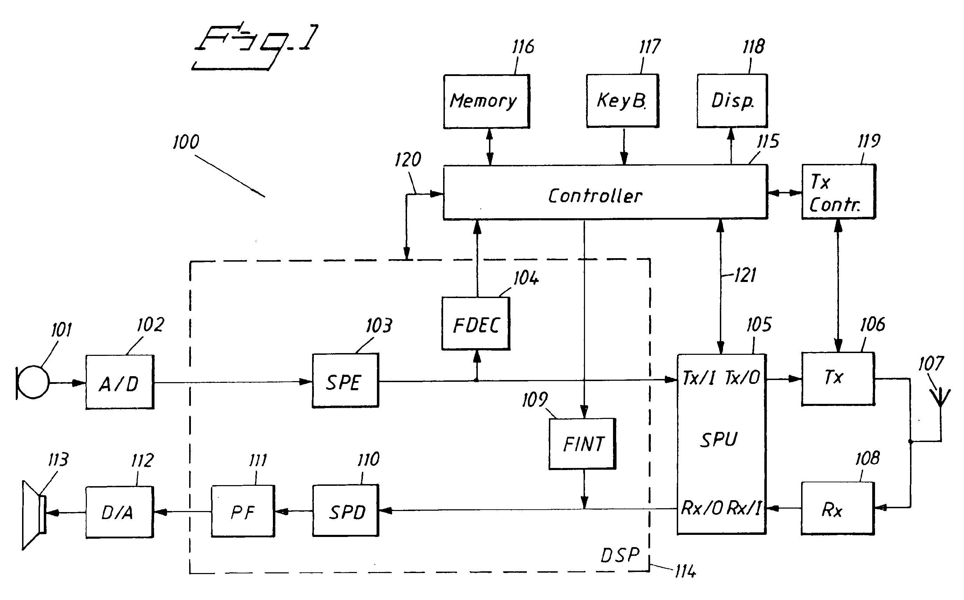

FIG 1 illustrates a block diagram of a communication device 100 in accordance with a first embodiment of the present invention. A microphone 101 is connected to an input of an analogue-to-digital', A/D, converter 102. The output of the A/D converter is connected to an input of a speech encoder, SPE, 103. The output of the speech encoder is connected to the input of a frame decimation block, FDB, 104 and to a transmitter input, Tx/I, of a signal processing unit, SPU, 105. A transmitter output, Tx/O, of the signal processing unit is connected to a transmitter, Tx, 106, and the output of the transmitter is connected to an antenna, 107, constituting a radio air interface. The antenna is also connected to the input of a receiver, Rx, 108, and the output of the receiver is connected to a receiver input, Rx/I, of the signal processing unit 105. A receiver output Rx/O of the signal processing unit 105 is connected to an input of a speech decoder, SPD, 110. The input of the speech decoder 110 is also connected to an output of a frame interpolation block, FINT, 109. The output of the speech decoder is connected to an input of a post-filtering block, PF, 111. The output of the post-filtering block is connected to an input of a digital-to-analogue, D/A, converter, 112. The output of the D/A converter is connected to a loudspeaker 113. Preferably, the SPE, FDEC, FINT, SPD and PF are implemented by means of a digital signal processor, DSP, 114 as is illustrated by the broken line in FIG 1. If a high degree of integration is desired, the A/D converter, the D/A converter and the SPU may also be implemented by means of the DSP. It should be understood that the elements implemented by means of the DSP may be realized as software routines run by the DSP. However, it would be equally possible to implement these elements by means of hardware solutions. The methods of choosing the actual implementation is well known in the art. The output of the frame decimation block 104 is connected to a controller 115. The controller also being connected to a memory 116, a keyboard 117, a display 118 and a transmit controller, Tx Contr, 119, the latter being connected to a control input of the transmitter, 106. The controller also controls the operation of the digital signal processor 114 illustrated by the connection 120 and the operation of the signal processing unit 105 illustrated by the connection 121 in FIG 1.

In operation the microphone 101 picks-up an acoustic voice signal and generates thereby a voice signal which is fed to and digitized by the A/D converter 102. The digitized signal is forwarded to the speech encoder 103 which encodes the signal according to a speech encoding algorithm. The signal is thereby compressed and an encoded voice signal is generated. The encoded voice signal is set in a pre-determined speech encoding format. By compressing the signal the bandwidth of the signal is reduced and, consequently, the bandwidth requirement of a transmission channel for transmitting the signal is also reduced. For example, in the GSM (Global System for Mobile communications) standard a residual pulse excited long term prediction, RPE-LTP coding algorithm is used. This algorithm, which is referred to as a full-rate speech coder algorithm, provides a compressed data rate of about 13 kbit/s and is more fully described in the GSM Recommendation 6.10 entitled "GSM Full Rate Speech Transcoding" which description is hereby incorporated by reference. The GSM standard also includes a half-rate speech coder algorithm which provides a compressed data rate of about 5.6 kbit/s. Another example is the vector sum excited linear prediction, VLSELP, coding algorithm which is used in the D-AMPS (Digital-Advanced Mobile Phone Systems) standard. It should be understood that the algorithm used by the speech encoder is not crucial to the present invention. Furthermore, the access method used by the communication system is not crucial to the present invention. Examples of access methods that may be used are CDMA (Code Division Multiple Access), TDMA (Time Division Multiple Access) and FDMA (Frequency Division Multiple Access).

The encoded voice signal is fed to the signal processing unit 105 where it is further processed before being transmitted as a radio signal by means of the transmitter 106 and the antenna 107. Certain parameters of the transmitter are controlled by the transmit controller 119, e.g. the transmission power. The transmit controller 119 is under the control of the controller 115. The communication device may also receive a radio transmitted encoded voice signal by means of the antenna 107 and the receiver 108. The signal from the receiver 108 is fed to the signal processing unit 105 for processing and a received encoded voice signal is thereby generated. The received encoded voice signal is coded in the pre-determined speech encoding format mentioned above. The signal processing unit 105 includes, for example, circuitry for digitizing the signal from the receiver, channel coding, channel decoding and interleaving. The received encoded voice signal is decoded by the speech decoder 110 according to a speech decoding algorithm and a decoded voice signal is generated. The speech decoding algorithm represents substantially the inverse to the speech encoding algorithm of the speech encoder 103. In this case the post-filtering block is disabled and the decoded voice signal is outputted by means of the loudspeaker 113 after being converted to an analogue signal by means of the D/A converter 112. The communication device comprises also a keyboard, KeyB, 117 and display, Disp, 118 for allowing a user to give commands to and receive information from the device.

In the case where the user wants to store a voice message in the memory 116 the user gives a command to the controller by pressing a pre-defined key or key-sequence at the keyboard 117 possibly guided by a menu system presented on the display 118. A voice message to be stored is then picked up by the microphone 101 and a digitized voice signal is generated by the A/D converter 102. The voice signal is encoded by the speech encoder 103 according to the speech encoding algorithm and an encoded voice signal having the pre-defined speech encoding format is provided. The encoded voice signal is inputted to the frame decimation block 104 where the signal is processed according to a compression algorithm and message data, coded in a pre-determined message data format, is generated. The message data is inputted to the controller 115 which stores the voice message by writing the message data into the memory 116.

Two compression algorithms will be discussed as examples of compression algorithms. The encoded voice signal may be considered to comprise a number of data frames, each data frame comprising a pre-determined number of bits. In many systems the concept of data frames and the number of bits per data frame is defined in the communication standard. A first compression algorithm eliminates i data frames out of j data frames where i an j are integers and j is greater than i. For example, every second data frame may be eliminated. A second compression algorithm makes use of the fact that in several systems the bits of a data frame is separated into at least two sets of data corresponding to pre-defined priority levels. For example, in the GSM system using the full-rate speech coder algorithm a data frame is defined as comprising 260 bits of which 182 are considered to be crucial (highest priority level) and 78 bits are considered to be non-crucial (lowest priority level). The crucial bits are normally protected by a high level of redundancy during radio transmission. Statistically the crucial bits will therefore be more insensitive to radio disturbances compared to the non-crucial bits. The second compression algorithm eliminates the bits of the data frame corresponding to the data set having the lowest priority level, i.e. the non-crucial bits. In the case where the data frame is defined to comprise more than two sets of data corresponding to more than two priority levels, the compression algorithm may eliminate a number of the sets of data corresponding to the lowest priority levels.

Although information is lost due to the compression algorithms discussed above, it is normally possible to reconstruct the signal sufficiently well, by the use of a decompression algorithm, to achieve a reasonable quality of the voice message when it is replayed. Decompression algorithms are discussed below.

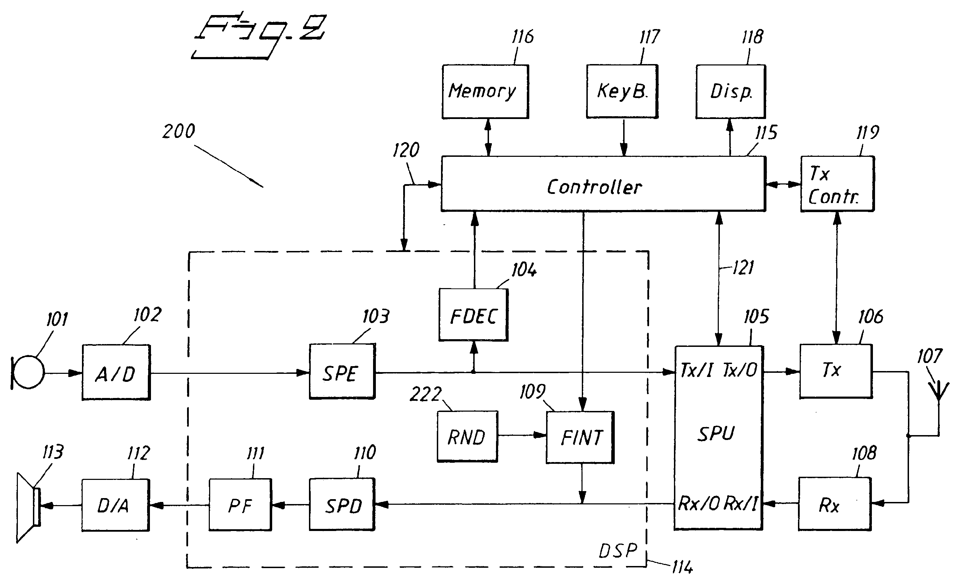

In the case where the user wants to retrieve a voice message stored in the memory 116 the user gives a command to the controller by pressing a pre-defined key or key-sequence at the keyboard 117. Message data corresponding to a selected voice message is then read out by the controller 115 and forwarded to the frame interpolation block 109. The decompression algorithm of the frame interpolation block performs substantially the inverse function to the compression algorithm of the frame decimation block. If message data has been compressed using the first compression algorithm discussed above where i data frames out of j data frames have been eliminated the corresponding decompression algorithm may reconstruct the eliminated frames by means of an interpolation algorithm, e.g. linear interpolation. Message data compressed according to the second compression algorithm where the bits corresponding to the set of data having the lowest priority level have been eliminated the corresponding decompression algorithm may replace the eliminated bits by any pre-selected bit pattern. Preferably, however, the eliminated bits are replaced by an random code sequence. The random code sequence may either be generated by a random code generator or taken from a stored list of (pseudo-random) sequences. The use of a random code generator is illustrated in FIG 2 which illustrates a block diagram of a communication device 200 in accordance with a second embodiment of the present invention. The second embodiment differs from the first embodiment in that the random code generator, RND, 222 is connected to the frame interpolation block 109. A random code sequence is thereby provided to the frame interpolation block 109.

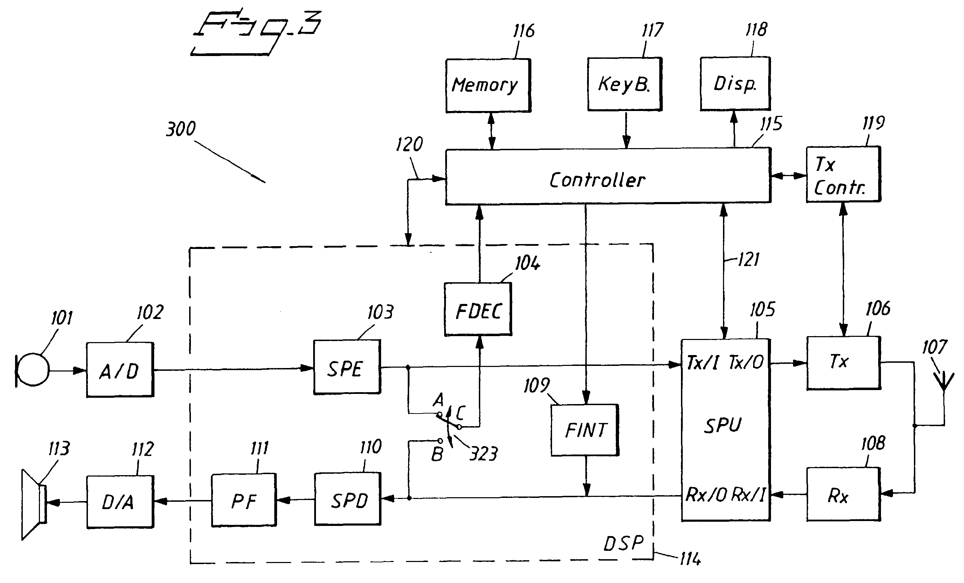

FIG 3 illustrates a block diagram of a communication device 300 in accordance with a third embodiment of the present invention. The third embodiment of the present invention differs from the first embodiment discussed above in that a switch 323 is introduced having a first terminal, A, connected to the output of the speech encoder 103, a second terminal, B, connected to the input of the speech decoder 110 and a common terminal, C, connected to the input of the frame decimation block 104. The switch may either connect terminal A or terminal B to terminal C upon control by the controller 115.

The operation of the third embodiment is identical to the operation of the first embodiment when the switch 323 connects the output of the speech encoder 103 to the input of the frame decimation block 104 (terminal A connected to terminal C). However, when the switch 323 is connecting the input of the speech decoder 110 to the input of the frame decimation block 104 (terminal B connected to terminal C) the user has the possibility to store a voice message which is received by the receiver 108. In this case the encoded voice signal appearing on the input of the speech decoder 110 also appears on the input of the frame decimation block 104. The frame decimation block thereby generates message data coded in the message data format. The controller 115 then stores the message data as a stored voice message in the memory 116. Accordingly, the user may choose to store either a voice message by speaking through the microphone or a voice message received by means of the receiver of the communication device.

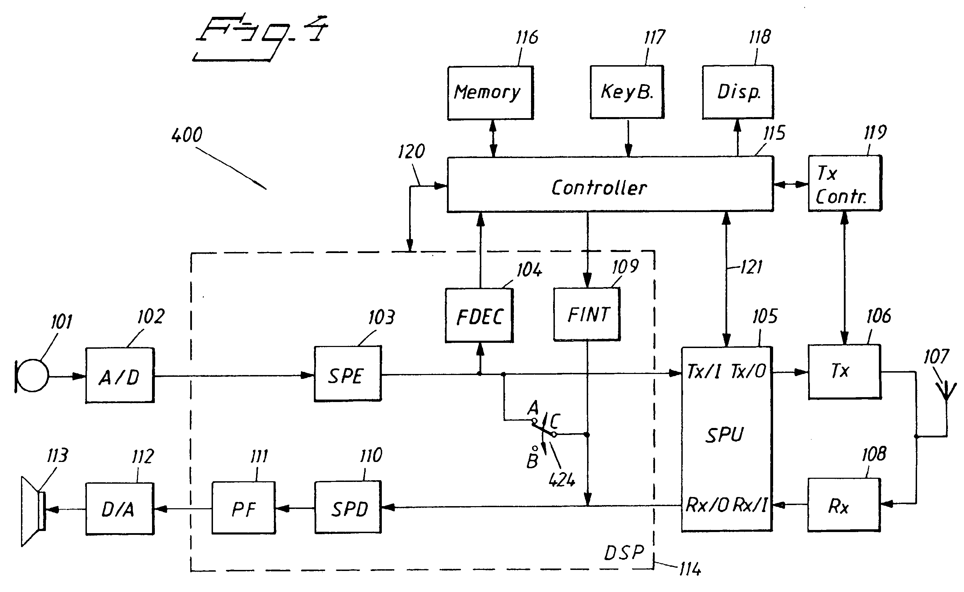

FIG 4 illustrates a block diagram of a communication device 400 in accordance with a fourth embodiment of the present invention. The fourth embodiment of the present invention differs from the first embodiment discussed above in that a switch 424 is introduced. The switch 424 has a first terminal, A, connected to the output of the speech encoder 103, a second terminal, B, not connected at all and a common terminal, C, connected to the output of the frame interpolation block 109. The switch may either connect terminal A or terminal B to terminal C upon control by the controller 115.

The operation of the fourth embodiment is identical to the operation of the first embodiment when the switch 424 does not connect the output of the frame interpolation block 109 to the transmitter input, Tx/I, of the signal processing unit 105 (terminal B connected to terminal C). In the case when the switch 424 does connect the output of the frame interpolation block 109 to the transmitter input, Tx/I, of the signal processing unit 105 (terminal A connected to terminal C) the user has the possibility to retrieve a stored voice message and transmit it by means of the transmitter 106. In this case message data corresponding to a stored voice message is read out from the memory 116 by the controller 115 and forwarded to the frame interpolation block 109. An encoded voice signal is generated at the output of the frame interpolation block 109 and this signal will also appear on the transmitter input, Tx/I of the signal processing unit 105 due to the switch 424. After processing by the signal processing unit the voice message is transmitted by means of the transmitter 106. Accordingly, the user may choose to retrieve a stored voice message and either just having it replayed through the loudspeaker or in addition having it sent by means of the transmitter.

Several other embodiments (not shown) are conceivable. For example, message data corresponding to a number of stored voice messages may be unalterably pre-stored in the memory. These messages may then be outputted by means of the loudspeaker or by means of the transmitter at the command of the user or initiated by the controller. For example, the controller may response to a particular operational status of the communication device by outputting a stored voice message to the user through the loudspeaker. In another example, the communication device may operate in a manner similar to an automatic answering machine. Assuming that there is an incoming call to the communication device and the user does not answer or does not want to answer, a stored voice message may then be read out from the memory under the control of the controller and transmitted to the calling party by means of the transmitter. The calling party is informed by the outputted stored voice message that the user is unable to answer the call and that the user may leave a voice message. If the calling party chooses to leave a voice message, the voice message is received by the receiver, compressed by the frame decimation block and eventually stored in the memory by means of the controller. The user may later replay the stored message which was placed by the calling party by reading out the stored voice message from the memory and outputting it by means of the loudspeaker.

The communication devices 100, 200 300 and 400 discussed above may, for example, be a mobile phone or a cellular phone. A duplex filter may be introduced for connecting the antenna 107 with the output of the transmitter 106 and the input of the receiver 108. The present invention is not limited to radio communication devices but may also be used for wired communication devices having a fixed-line connection. Moreover, the user may give commands to the communication device 100, 200, 300, 400 by voice commands instead of, or in addition to, using the keyboard 117.

The frame decimation block 104 may more generally be labeled a code compression means and any algorithm performing compression may be used. Both algorithms introducing distortion, e.g. the methods described above, and algorithms being able to recreate the original signal completely, such as Ziv-Lempel or Huffman, can be used. The Ziv-Lempel algorithm and the Huffman algorithm are discussed in "Elements of Information Theory" by Thomas M. Cover, pp. 319- and pp. 92, respectively, which descriptions are hereby incorporated by reference. Likewise, the frame interpolation block, FINT, 109 may more generally be labeled a code decompression means which algorithm substantially carries out the inverse operation to the algorithm used by the code compression means.

It should be noted that the term "communication device" of the present invention may refer to a hands-free equipment adapted to operate with another communication device, such as a mobile phone or a cellular phone. Furthermore, the elements of the present invention may be realized in different physical devices. For example, the frame interpolation block, FINT, 109 and/or the frame decimation block, FDB, 104 may equally well be implemented in an accessory to a cellular phone as in the cellular phone itself. Examples of such accessories are hands-free equipment and expansion units. An expansion unit may be connected to a system-bus connector of the cellular phone and may thereby provide message storing functions, such as dictating machine functions or answering machine functions.

The construction and method of operation of the present invention achieve the advantage that a voice message is stored in the memory in a more compressed format than the format provided by a speech encoder. Such a stored voice message is decompressed by the decompression means to recreate an encoded voice signal in according to the speech encoding format, i.e. the format provided after a voice signal has passed a speech encoder.

Since a stored voice message is stored in the memory in a more compressed format than the format provided by a speech encoder, as is the case in the prior art, less memory is required to store a particular voice message. A smaller memory can therefore be used. Alternatively, a longer voice message can be stored in a particular memory. Consequently, the communication device of the present invention requires less memory and, hence, is cheaper to implement. In, for example, small hand-held communication devices, where memory is a scarce resource, the smaller amount of memory required provides obvious advantages. Furthermore, a small amount of computation power is required due to the fact that simple decompression algorithms can be used by the decompression means.

## Claims

1. A communication device (100, 200, 300, 400) comprising:
a microphone (101) for receiving an acoustic voice signal thereby generating a voice signal,
a speech encoder (103) adapted to encoding the voice signal according to a speech encoding algorithm, the voice signal thereby being compressed in a speech encoding format,
a transmitter (106) for transmitting the encoded voice signal,
a receiver (108) for receiving a transmitted encoded voice signal, the received encoded voice signal being coded in the speech encoding format,
a speech decoder (110) for decoding the received encoded voice signal from the speech encoded format according to the speech decoding algorithm,
a loudspeaker (113) for outputting the decoded voice signal,
a memory (116) for holding message data corresponding to at least one stored voice message,
memory read out means (115) for reading out message data corresponding to a voice message from the memory, the device being **characterized in that** it further comprises:
code decompression means (109) for decompressing read out message data from a message data format which is more compressed than the speech encoding format provided by the speechencoder, to the speech encoding format, for passing the decompressed message data to at least one of the speech decoder (110) and the transmitter (106).

2. A communication device according to claim 1 further comprising:
first connection means for passing the message data decompressed by the code decompression means to the speech decoder, the decompressed message data thereby being decoded according to the speech decoding algorithm and outputted as a voice message by means of the loudspeaker.

3. A communication device according to claim 2 wherein the first connection means optionally passes the message data to the speech decoder under the control by a user of the communication device.

4. A communication device according to any one of the preceding claims further comprising:
post filtering means (111) for filtering the signal decoded by the speech decoder before it is outputted by means of the loudspeaker.

5. A communication device according to claim 4 wherein the post filtering means (111) is a low pass filter.

6. A communication device according to any one of claim 1 to claim 5 further comprising:
second connection means for passing the message data decompressed by the code decompression means to the transmitter, thereby allowing the decompressed message data to be transmitted by the transmitter.

7. A communication device according to claim 6 wherein the second connection means optionally passes the message data to the transmitter under the control by a user of the communication device.

8. A communication device according to any one of the preceding claims further comprising:
code compression means (104) for compressing an encoded voice signal coded in the speech encoding format thereby generating message data coded in the message data format,
memory write means (115) for storing the compressed message data in the memory as a stored voice message.

9. A communication device according to claim 8 further comprising:
third connection means for passing the encoded voice signal of the speech encoder to the code compression means, the code compression means thereby compressing an encoded voice signal corresponding to an acoustic voice signal picked up by the microphone, and allowing the compressed voice signal to be stored in the memory as a stored voice message by the memory write means.

10. A communication device according to claim 9 wherein the third connection means optionally passes the encoded voice signal of the speech encoder to the code compression means under the control by a user of the communication device.

11. A communication device according to any one of claim 8 or claim 10 further comprising:
fourth connection means for passing the encoded voice signal received by the receiver to the compression means, the compression means thereby compressing the encoded voice signal, and allowing the compressed voice signal to be stored in the memory as a stored voice message by the memory write means.

12. A communication device according to claim 11 wherein the fourth connection means passes the encoded voice signal received by the receiver to the compression means under the control by a user of the communication device.

13. A communication device according to any one of the preceding claims wherein the code decompression means generates m data frames from n inputted data frames by means of a linear interpolation method, a data frame comprising a pre-determined number of binary bits, m and n being integers and m being greater than n.

14. A communication device according to any one of the preceding claims further comprising:
a random code generator (222) for generating random code sequences, the random code sequences being used in combination with read out message data to form data corresponding to the speech encoding format.

15. A communication device according to any one of claim 1 to claim 12 wherein the code decompression means is adapted to perform the Ziv-Lempel or the Huffman algorithm.

16. A communication device according to any one of claim 8 to claim 14 wherein the code compression means eliminates i data frames out of j data frames, a data frame comprising a pre-determined number of binary bits, i and j being integers and j being greater than i.

17. A communication device according to any one of claim 8 to claim 14 or claim 16 wherein the code compression means eliminates k bits out of 1 bits of each data frame, a data frame comprising a pre-determined number of binary bits, k and 1 being integers and 1 being greater than k.

18. A communication device according to any one of claim 8 to claim 14 or claim 16 or claim 17 wherein the encoded voice signal according to the speech encoding format comprises at least two sets of data corresponding to pre-defined priority levels, and wherein the code compression means eliminates at least the set of data corresponding to the lowest priority level.

19. A communication device according to claim 18 insofar as dependent on claim 14 wherein the random code sequences generated by the random code generator are used instead of data corresponding to data eliminated by the code compression means.

20. A communication device according to any one of claim 8 to claim 15 wherein the code compression means is adapted to perform the Ziv-Lempel or the Huffman algorithm.

21. A communication device according to any one of the preceding claims further comprising:
an analogue-to-digital converter (102) for receiving the voice signal generated by the microphone thereby generating a digitized voice signal, the digitized voice signal being passed to the speech encoder, and
a digital-to-analogue converter (112) for receiving the decoded voice signal thereby generating an analogue signal, the analogue signal being outputted by means of the loudspeaker.

22. A communication device according to any one of the preceding claims wherein the communication device forms part of a hands-free equipment adapted to operate with a radio communication device, such as a cellular phone.

23. A communication device according to claim 21 wherein the communication device is a cellular phone.

24. A voice message retrieval method comprising the steps of:
reading out message data coded in a message data format from a memory;
decompressing the read out message data by means of a decompression algorithm whereby the decompressed data being coded in a speech encoding format, the message data format being more compressed than the speech encoding format; and passing the decompressed message data to atteast one of a speech decoder (110) and a transmitter (106)

25. A voice message retrieval method according to claim 24 further comprising the steps of:
decoding the decompressed message data according to a speech decoding algorithm; and
passing the decoded message data to a loudspeaker for outputting the voice message as an acoustic voice signal.

26. A voice message retrieval method according to claim 25 further comprising the step of:
post filtering the decoded message data according to a filtering method before it is outputted by means of the loudspeaker.

27. A voice message retrieval method according to claim 26 wherein the post filtering method performs low pass filtering.

28. A voice message retrieval method according to claim for 24 for use with a communication device further comprising the steps of:
passing the decompressed message data to a transmitter for transmitting the voice message from the communication device.

29. A voice message retrieval method according to any one of claim 24 to claim 28 wherein the decompression algorithm comprises the step of:
generating m data frames from n inputted data frames by means of a linear interpolation method, a data frame comprising a pre-determined number of binary bits, m and n being integers and m being greater than n.

30. A voice message retrieval method according to any one of claim 24 to claim 28 wherein the decompression algorithm performs the Ziv-Lempel or the Huffman algorithm.

31. A voice message retrieval method according to any one of claim 24 to claim 30 further comprising the steps of:
providing an encoded voice signal coded in a speech encoding format;
compressing the encoded voice signal according to a compression algorithm thereby generating message data coded in a message data format, the message data format being more compressed than the speech encoding format; and
storing the compressed message data in a memory as a stored voice message.

32. A voice message retrieval method according to claim 31 further comprising the steps of:
converting an acoustic voice signal to an electrical voice signal;
encoding the electrical voice signal by means of a speech encoding algorithm thereby generating said encoded voice signal coded in a speech encoding format;

33. A voice message retrieval method according to claim 31 for use with a communication device further comprising the steps of:
receiving an transmitted encoded voice signal coded in a speech encoding format.

34. A voice message retrieval method according to any one of claim 31 to claim 33 wherein the compression algorithm comprises the step of:
eliminating i data frames out of j data frames, where a data frame comprises a pre-determined number of binary bits, i and j are integers and j is greater than i.

35. A voice message retrieval method according to any one of claim 31 to claim 33 wherein the compression algorithm comprises the step of:
eliminating k bits out of 1 bits of each data frame, where a data frame comprises a pre-determined number of binary bits, k and 1 are integers and 1 is greater than k.

36. A voice message retrieval method according to any one of claim 31 to claim 35 wherein the encoded voice signal according to the speech encoding format comprises at least two sets of data corresponding to pre-defined priority levels, and wherein the compression algorithm further comprises the step of:
eliminating at least the set of data corresponding to the lowest priority level.

37. A voice message retrieval method according to any one of claim 31 or claim 33 wherein the compression algorithm performs the Ziv-Lempel or the Huffman algorithm.

## Patentansprüche

1. Kommunikationsgerät (100, 200, 300, 400), das Folgendes aufweist:
ein Mikrofon (101) zum Empfangen eines akustischen Stimmsignals, wodurch es ein Stimmsignal erzeugt,
einen Sprachkodierer (103), der angepasst ist, um das Stimmsignal gemäß einem Sprachkodieralgorithmus zu kodieren, wodurch das Stimmsignal in einem Sprachkodierungsformat komprimiert wird,
einen Sender (106) zum Übertragen des kodierten Stimmsignals,
einen Empfänger (108) zum Empfangen eines übertragenen kodierten Stimmsignals, wobei das empfangene kodierte Stimmsignal im Sprachkodierformat kodiert ist,
einen Sprachdekodierer (110) zum Dekodieren des empfangenen kodierten Stimmsignals aus dem Sprachkodierformat gemäß dem Sprachdekodierungsalgorithmus,
einen Lautsprecher (113) zum Ausgeben des dekodierten Stimmsignals,
einen Speicher (116) zum Halten von Nachrichtendaten, die wenigstens einer gespeicherten Sprachnachricht entsprechen,
ein Speicherlesemittel (115) zum Lesen der Nachrichtendaten, die einer Sprachnachricht aus dem Speicher entsprechen, wobei das Gerät **dadurch gekennzeichnet ist, dass** es außerdem Folgendes umfasst:
ein Codedekomprimiermittel (109) zum Dekomprimieren gelesener Nachrichtendaten aus einem Nachrichtendatenformat, das stärker komprimiert ist als das Sprachkodierformat des Sprachkodierers, in das Sprachkodierformat, um die dekomprimierten Nachrichtendaten an wenigstens einen der Sprachdekodierer (110) und den Sender (106) weiterzuleiten.

2. Kommunikationsgerät nach Anspruch 1, das außerdem Folgendes aufweist:
ein erstes Verbindungsmittel zum Weiterleiten der Nachrichtendaten, die vom Codedekomprimiermittel dekomprimiert wurden, an den Sprachdekodierer, wodurch die dekomprimierten Nachrichtendaten gemäß dem Sprachdekodierungsalgorithmus dekodiert und mit Hilfe des Lautsprechers als eine Sprachnachricht ausgegeben werden.

3. Kommunikationsgerät nach Anspruch 2, wobei das erste Verbindungsmittel wahlweise unter Kontrolle eines Nutzers des Kommunikationsgeräts die Nachrichtendaten an den Sprachdekodierer weiterleitet.

4. Kommunikationsgerät nach einem der vorhergehenden Ansprüche, das außerdem Folgendes aufweist:
ein Nachfiltermittel (111) zum Filtern des Signals, das vom Sprachdekodierer dekodiert wurde, bevor es mit Hilfe des Lautsprechers ausgegeben wird.

5. Kommunikationsgerät nach Anspruch 4, wobei das Nachfiltermittel (111) ein Tiefpassfilter ist.

6. Kommunikationsgerät nach einem der Ansprüche 1 bis 5, das außerdem Folgendes aufweist:
ein zweites Verbindungsmittel zum Weiterleiten der Nachrichtendaten, die vom Codedekomprimiermittel dekomprimiert wurden, an den Sender, wodurch die dekomprimierten Nachrichtendaten vom Sender übertragen werden können.

7. Kommunikationsgerät nach Anspruch 6, wobei das zweite Verbindungsmittel wahlweise unter Kontrolle eines Nutzers des Kommunikationsgeräts die Nachrichtendaten an den Sender weiterleitet.

8. Kommunikationsgerät nach einem der vorhergehenden Ansprüche, das außerdem Folgendes aufweist:
ein Codekomprimierungsmittel (104) zum Komprimieren eines kodierten Stimmsignals, das im Sprachkodierformat kodiert ist, wodurch Nachrichtendaten erzeugt werden, die im Nachrichtendatenformat kodiert sind,
ein Speicherschreibemittel (115) zum Speichern der komprimierten Nachrichtendaten im Speicher als gespeicherte Sprachnachricht.

9. Kommunikationsgerät nach Anspruch 8, das außerdem Folgendes aufweist:
ein drittes Verbindungsmittel zum Weiterleiten der kodierten Sprachnachricht des Sprachkodierers an das Codekomprimierungsmittel, wodurch das Codekomprimierungsmittel ein kodiertes Stimmsignal komprimiert, das einem akustischen Stimmsignal entspricht, das vom Mikrofon aufgenommen wurde, und wodurch das komprimiert Stimmsignal mit Hilfe des Speicherschreibemittels als gespeicherte Sprachnachricht im Speicher gespeichert werden kann.

10. Kommunikationsgerät nach Anspruch 9, wobei das dritte Verbindungsmittel wahlweise unter Kontrolle eines Nutzers des Kommunikationsgeräts das kodierte Stimmsignal des Sprachkodierers an das Codekomprimierungsmittel weiterleitet.

11. Kommunikationsgerät nach Anspruch 8 oder 10, das außerdem Folgendes aufweist:
ein viertes Verbindungsmittel zum Weiterleiten des kodierten Stimmsignals, das vom Empfänger empfangen wurde, an das Komprimiermittel, wodurch das Komprimiermittel das kodierte Stimmsignal komprimiert, und wodurch das komprimierte Stimmsignal mit Hilfe des Speicherschreibemittels als gespeicherte Sprachnachricht im Speicher gespeichert werden kann.

12. Kommunikationsgerät nach Anspruch 11, wobei das vierte Verbindungsmittel unter Kontrolle eines Nutzers des Kommunikationsgeräts das kodierte Stimmsignal, das vom Empfänger empfangen wurde, an das Komprimiermittel weiterleitet.

13. Kommunikationsgerät nach einem der vorhergehenden Ansprüche, wobei das Codedekomprimierungsmittel mit Hilfe eines linearen Interpolierungsverfahrens m Datenübertragungsblöcke für n eingegebene Datenübertragungsblöcke erzeugt, wobei ein Datenübertragungsblock eine vorbestimmte Anzahl von Binärbits umfasst, wobei m und n ganze Zahlen sind und m größer als n ist.

14. Kommunikationsgerät nach einem der vorhergehenden Ansprüche, das außerdem Folgendes aufweist:
einen Zufallscodegenerator (222) zum Erzeugen zufälliger Codesequenzen, wobei die zufälligen Codesequenzen in Kombination mit den gelesenen Nachrichtendaten benutzt werden, um Daten zu bilden, die dem Sprachkodierformat entsprechen.

15. Kommunikationsgerät nach einem der Ansprüche 1 bis 12, wobei das Codedekomprimierungsmittel angepasst ist, um den Ziv-Lempel- oder den Huffman-Algorithmus auszuführen.

16. Kommunikationsgerät nach einem der Ansprüche 8 bis 14, wobei das Codekomprimierungsmittel i Datenübertragungsblöcke von j Datenübertragungsblöcken eliminiert, wobei ein Datenübertragungsblock eine vorbestimmte Anzahl von Binärbits umfasst, wobei i und j ganze Zahlen sind und j größer als i ist.

17. Kommunikationsgerät nach einem der Ansprüche 8 bis 14, wobei das Codekomprimierungsmittel k Bits von 1 Bits jedes Datenübertragungsblocks eliminiert, wobei Datenübertragungsblock eine vorbestimmte Anzahl von Binärbits umfasst, wobei k und 1 ganze Zahlen sind und 1 größer als k ist.

18. Kommunikationsgerät nach einem der Ansprüche 8 bis 14 oder 16 oder 17, wobei das gemäß dem Sprachkodierformat kodierte Stimmsignal wenigstens zwei Datensätze aufweist, die vorbestimmten Prioritätsstufen entsprechen, und wobei das Codekomprimierungsmittel wenigstens den Datensatz eliminiert, der der niedrigsten Prioritätsstufe entspricht.

19. Kommunikationsgerät nach Anspruch 18, soweit dieser abhängig ist von Anspruch 14, wobei die zufälligen Codesequenzen, die vom Zufallscodegenerator erzeugt wurden, anstelle der Daten benutzt werden, die vom Codekomprimierungsmittel eliminiert wurden.

20. Kommunikationsgerät nach einem der Ansprüche 8 bis 15, wobei das Codekomprimierungsmittel angepasst ist, um den Ziv-Lempel- oder den Huffman-Algorithmus auszuführen.

21. Kommunikationsgerät nach einem der vorhergehenden Ansprüche, das außerdem Folgendes aufweist:
einen Analog/Digital-Wandler (102) zum Empfangen des Stimmsignals, das vom Mikrofon erzeugt wird, wodurch ein digitalisiertes Stimmsignal erzeugt wird, wobei das digitalisierte Stimmsignal an den Sprachkodierer weitergeleitet wird, und
einen Digital/Analog-Wandler (112) zum Empfangen des dekodierten Stimmsignals, wodurch ein Analogsignal erzeugt wird, wobei das Analogsignal mit Hilfe des Lautsprechers ausgegeben wird.

22. Kommunikationsgerät nach einem der vorhergehenden Ansprüche, wobei das Kommunikationsgerät Teil einer Freisprechausrüstung ist, die angepasst ist, um mit einem Funkkommunikationsgerät wie z. B. einem Mobiltelefon zu arbeiten.

23. Kommunikationsgerät nach Anspruch 21, wobei das Kommunikationsgerät ein Mobiltelefon ist.

24. Verfahren zum Abrufen von Sprachnachrichten, das folgende Schritte umfasst:
Ablesen von Nachrichtendaten, die in einem Nachrichtendatenformat kodiert sind, aus einem Speicher,
Dekomprimieren der abgelesenen Nachrichtendaten mit Hilfe eines Dekomprimierungsalgorithmus, wodurch die dekomprimierten Daten in einem Sprachkodierformat kodiert werden, wobei das Nachrichtendatenformat stärker komprimiert ist als das Sprachkodierformat, und
Weiterleiten der dekomprimierten Nachrichtendaten an wenigstens einen Sprachdekodierer (110) und einen Sender (106).

25. Verfahren zum Abrufen von Sprachnachrichten nach Anspruch 24, das außerdem folgende Schritte umfasst:
Dekodieren der dekomprimierten Nachrichtendaten gemäß einem Sprachdekodieralgorithmus, und
Weiterleiten der dekodierten Nachrichtendaten an einen Lautsprecher, um die Sprachnachricht als ein akustisches Stimmsignal auszugeben.

26. Verfahren zum Abrufen von Sprachnachrichten nach Anspruch 25, das außerdem folgenden Schritt umfasst:
Nachfiltern der dekodierten Nachrichtendaten gemäß einem Filterverfahren, bevor sie mit Hilfe des Lautsprechers ausgegeben werden.

27. Verfahren zum Abrufen von Sprachnachrichten nach Anspruch 26, wobei das Nachfilterverfahren ein Tiefpassfiltern durchführt.

28. Verfahren zum Abrufen von Sprachnachrichten nach Anspruch 24 zum Benutzen mit einem Kommunikationsgerät, das außerdem folgenden Schritt umfasst:
Weiterleiten der dekomprimierten Daten an einen Sender, um die Sprachnachricht von dem Kommunikationsgerät zu übertragen.

29. Verfahren zum Abrufen von Sprachnachrichten nach einem der Ansprüche 24 bis 28, wobei der Dekomprimierungsalgorithmus folgenden Schritt umfasst:
Erzeugen von m Datenübertragungsblöcken von n eingegebenen Datenübertragungsblöcken, wobei ein Datenübertragungsblock eine vorbestimmte Anzahl von Binärbits aufweist, wobei m und n ganze Zahlen sind und m größer als n ist.

30. Verfahren zum Abrufen von Sprachnachrichten nach einem der Ansprüche 24 bis 28, wobei der Dekomprimierungsalgorithmus den Ziv-Lempel- oder den Huffman-Algorithmus ausführt.

31. Verfahren zum Abrufen von Sprachnachrichten nach einem der Ansprüche 24 bis 30, das außerdem folgende Schritte umfasst:
Bereitstellen eines kodierten Stimmsignals in einem Sprachkodierformat,
Komprimieren des kodierten Stimmsignals gemäß einem Komprimierungsalgorithmus, wodurch Nachrichtendaten erzeugt werden, die in einem Nachrichtendatenformat kodiert sind, wobei das Nachrichtendatenformat stärker komprimiert ist als das Sprachkodierformat, und
Speichern der komprimierten Nachrichtendaten in einem Speicher als gespeicherte Sprachnachricht.

32. Verfahren zum Abrufen von Sprachnachrichten nach Anspruch 31, das außerdem folgende Schritte umfasst:
Umwandeln eines akustischen Stimmsignals in ein elektrisches Stimmsignal,
Kodieren des elektrischen Stimmsignals mit Hilfe eines Sprachkodieralgorithmus, wodurch das in einem Sprachkodierformat kodierte Stimmsignal erzeugt wird.

33. Verfahren zum Abrufen von Sprachnachrichten nach Anspruch 31 zum Benutzen mit einem Kommunikationsgerät, das außerdem folgenden Schritt umfasst:
Empfangen eines übertragenen kodierten Stimmsignals, das in einem Sprachkodierformat kodiert ist.

34. Verfahren zum Abrufen von Sprachnachrichten nach einem der Ansprüche 31 bis 33, wobei der Komprimierungsalgorithmus folgenden Schritt umfasst:
Eliminieren von i Datenübertragungsblöcken aus j Datenübertragungsblöcken, wobei ein Datenübertragungsblock eine vorbestimmte Anzahl von Binärbits umfasst, wobei i und j ganze Zahlen sind und j größer als i ist.

35. Verfahren zum Abrufen von Sprachnachrichten nach einem der Ansprüche 31 bis 33, wobei der Komprimierungsalgorithmus folgenden Schritt umfasst:
Eliminieren von k Bits aus 1 Bits eines jeden Datenübertragungsblocks, wobei ein Datenübertragungsblock eine vorbestimmte Anzahl von Binärbits umfasst, wobei k und 1 ganze Zahlen sind und 1 größer als k ist.

36. Verfahren zum Abrufen von Sprachnachrichten nach einem der Ansprüche 31 bis 35, wobei das gemäß dem Sprachkodierformat kodierte Stimmsignal wenigstens zwei Datensätze aufweist, die vorbestimmten Prioritätsstufen entsprechen, und wobei der Komprimierungsalgorithmus außerdem folgenden Schritt umfasst:
Eliminieren von wenigstens einem Datensatz, der der niedrigsten Prioritätsstufe entspricht.

37. Verfahren zum Abrufen von Sprachnachrichten nach einem der Ansprüche 31 oder 33, wobei der Komprimierungsalgorithmus den Ziv-Lempel- oder den Huffman-Algorithmus ausführt.

## Revendications

1. Dispositif de communication (100, 200, 300, 400) comprenant :
un microphone (101) destiné à recevoir un signal acoustique vocal et ainsi produire un signal vocal,
un codeur de parole (103) conçu pour coder le signal vocal selon un algorithme de codage de la parole, le signal vocal étant ainsi compressé dans un format de codage de la parole,
un émetteur (196) destiné à émettre le signal vocal codé,
un récepteur (108) destiné à recevoir un signal vocal codé émis, le signal vocal codé émis étant codé dans le format de codage de la parole,
un décodeur de parole (110) destiné à décoder le signal vocal codé reçu à partir du format codé de parole, selon l'algorithme de décodage de la parole,
un haut-parleur (113) destiné à reproduire le signal vocal décodé,
une mémoire (116) destinée à stocker des données de message correspondant à au moins un message vocal stocké,
un moyen de lecture de mémoire (115) destiné à lire dans la mémoire des données de message correspondant à un message vocal, le dispositif étant **caractérisé en ce qu'**il comprend en outre :
un moyen de décompression de code (109) destiné à décompresser les données de message lues, d'un format de données de message, qui est plus compressé que le format de codage de la parole fourni par le codeur de parole, au format de codage de la parole, afin de passer les données de message décompressées à au moins l'un du décodeur de parole (110) et de l'émetteur (106).

2. Dispositif de communication selon la revendication 1, comprenant en outre :
un premier moyen de connexion destiné à passer au décodeur de parole les données de message décompressées par le moyen de décompression de code, les données de message décompressées étant ainsi décodées selon l'algorithme de décodage de la parole et fournies en sortie sous la forme d'un message vocal par le haut-parleur.

3. Dispositif de communication selon la revendication 2, dans lequel le premier moyen de connexion passe optionnellement les données de message au décodeur de parole, sous le contrôle d'un utilisateur du dispositif de communication.

4. Dispositif de communication selon l'une quelconque des revendications précédentes, comprenant en outre :
un moyen de postfiltrage (111) destiné à filtrer le signal décodé par le décodeur de parole avant qu'il ne soit fourni en sortie via le haut-parleur.

5. Dispositif de communication selon la revendication 4, dans lequel le moyen de postfiltrage (111) est un filtre passe-bas.

6. Dispositif de communication selon l'une quelconque des revendications 1 à 5, comprenant en outre :
un deuxième moyen de connexion destiné à passer à l'émetteur les données de message décompressées par le moyen de décompression de code, ce qui permet que les données de message décompressées soient émises par l'émetteur.

7. Dispositif de communication selon la revendication 6, dans lequel le deuxième moyen de connexion passe optionnellement les données de message à l'émetteur, sous le contrôle d'un utilisateur du dispositif de communication.

8. Dispositif de communication selon l'une quelconque des revendications précédentes, comprenant en outre :
un moyen de compression de code (104), destiné à compresser un signal vocal codé, codé dans le format de codage de la parole, afin de produire ainsi des données de message codées dans le format de données de message,
un moyen d'écriture en mémoire (115), destiné à stocker les données de message compressées dans la mémoire, sous la forme d'un message vocal stocké.

9. Dispositif de communication selon la revendication 8, comprenant en outre :
un troisième moyen de connexion, destiné à passer au moyen de compression de code le signal vocal codé du codeur de parole, le moyen de compression de code comprimant ainsi un signal vocal codé correspondant à un signal acoustique vocal capté par le microphone et permettant que le signal vocal compressé soit stocké dans la mémoire, par le moyen d'écriture en mémoire, sous la forme d'un message vocal stocké.

10. Dispositif de communication selon la revendication 9, dans lequel le troisième moyen de connexion passe optionnellement au moyen de compression de code le signal vocal codé du codeur de parole, sous le contrôle d'un utilisateur du dispositif de communication.

11. Dispositif de communication selon l'une quelconque de la revendication 8 ou de la revendication 10, comprenant en outre :
un quatrième moyen de connexion, destiné à passer au moyen de compression le signal vocal codé reçu par le récepteur, le moyen de compression comprimant ainsi le signal vocal codé et permettant au signal vocal compressé d'être stocké dans la mémoire, par le moyen d'écriture en mémoire, sous la forme d'un message vocal stocké.

12. Dispositif de communication selon la revendication 11, dans lequel le quatrième moyen de connexion passe le signal vocal codé reçu par le récepteur au moyen de compression sous le contrôle d'un utilisateur du dispositif de communication.

13. Dispositif de communication selon l'une quelconque des revendications précédentes, dans lequel le moyen de décompression de code produit m trames de données pour n trames de données entrées, au moyen d'un procédé d'interpolation linéaire, une trame de données comprenant un nombre prédéterminé de bits binaires, m et n étant des entiers et m étant plus grand que n.

14. Dispositif de communication selon l'une quelconque des revendications précédentes, comprenant en outre :
un générateur de code aléatoire (222), destiné à produire des séquences de codes aléatoires, les séquences de codes aléatoires étant utilisées en combinaison avec des données de message lues afin de former des données correspondant au format de codage de la parole.

15. Dispositif de communication selon l'une quelconque des revendications 1 à 12, dans lequel le moyen de décompression de code est conçu pour exécuter l'algorithme de Ziv-Lempel ou de Huffman.

16. Dispositif de communication selon l'une quelconque des revendications 8 à 14, dans lequel le moyen de compression de code élimine i trames de données sur j trames de données, une trame de données comprenant un nombre prédéterminé de bits binaires, i et j étant des entiers et j étant plus grand que i.

17. Dispositif de communication selon l'une quelconque des revendications 8 à 14 ou la revendication 16, dans lequel le moyen de compression de code élimine k bits sur 1 bits de chaque trame de données, une trame de données comprenant un nombre prédéterminé de bits binaires, k et 1 étant des entiers et 1 étant plus grand que k.

18. Dispositif de communication selon l'une quelconque des revendications 8 à 14 ou la revendication 16 ou la revendication 17, dans lequel le signal vocal codé selon le format de codage de la parole comprend au moins deux ensembles de données correspondant à des niveaux de priorité prédéfinis et dans lequel le moyen de compression de code élimine au moins l'ensemble de données correspondant au niveau de priorité le plus bas.

19. Dispositif de communication selon la revendication 18, dans la mesure où elle dépend de la revendication 14, dans lequel les séquences de codes aléatoires produites par le générateur de codes aléatoires sont utilisées à la place des données correspondant aux données éliminées par le moyen de compression de code.

20. Dispositif de communication selon l'une quelconque des revendications 8 à 15, dans lequel le moyen de décompression de code est conçu pour exécuter l'algorithme de Ziv-Lempel ou de Huffman.

21. Dispositif de communication selon l'une quelconque des revendications précédentes, comprenant en outre :
un convertisseur analogique-numérique (102), destiné à recevoir le signal vocal produit par le microphone afin de produire ainsi un signal vocal numérisé, le signal vocal numérisé étant passé au codeur de parole, et
un convertisseur numérique-analogique (112), destiné à recevoir le signal vocal décodé afin de produire ainsi un signal analogique, le signal analogique étant fourni en sortie au moyen du haut-parleur.

22. Dispositif de communication selon l'une quelconque des revendications précédentes, dans lequel le dispositif de communication fait partie d'un équipement mains libres conçu pour fonctionner avec un dispositif de radiocommunication tel qu'un téléphone cellulaire.

23. Dispositif de communication selon la revendication 21, dans lequel le dispositif de communication est un téléphone cellulaire.

24. Procédé d'extraction de messages vocaux comprenant les étapes consistant à :
lire dans une mémoire des données de message codées dans un format de données de message ;
décompresser les données de message lues au moyen d'un algorithme de décompression, les données décompressées étant codées dans un format de codage de la parole, le format de données de message étant plus compressé que le format de codage de la parole ; et
passer les données de message décompressées à au moins l'un d'un décodeur de parole (110) et d'un émetteur (106).

25. Procédé d'extraction de messages vocaux selon la revendication 24, comprenant en outre les étapes consistant à :
décoder les données de message décompressées selon un algorithme de décodage de la parole ; et
passer les données de message décodées à un haut-parleur afin de fournir le message vocal en sortie sous la forme d'un signal acoustique de parole.

26. Procédé d'extraction de messages vocaux selon la revendication 25, comprenant en outre l'étape consistant à :
postfiltrer les données de message décodées selon un procédé de filtrage, avant qu'elles ne soient fournies en sortie au moyen du haut-parleur.

27. Procédé d'extraction de messages vocaux selon la revendication 26, dans lequel le procédé de postfiltrage exécute un filtrage passe-bas.

28. Procédé d'extraction de messages vocaux selon la revendication 24, destiné à être utilisé avec un dispositif de communication, comprenant en outre l'étape consistant à :
passer les données de message décompressées à un émetteur pour l'émission du message vocal à partir du dispositif de communication.

29. Procédé d'extraction de messages vocaux selon l'une quelconque des revendications 24 à 28, dans lequel l'algorithme de décompression comprend l'étape consistant à :
produire m trames de données pour n trames de données entrées, au moyen d'un procédé d'interpolation linéaire, une trame de données comprenant un nombre prédéterminé de bits binaires, m et n étant des entiers et m étant plus grand que n.

30. Procédé d'extraction de messages vocaux selon l'une quelconque des revendications 24 à 28, dans lequel l'algorithme de décompression exécute l'algorithme de Ziv-Lempel ou de Huffman.

31. Procédé d'extraction de messages vocaux selon l'une quelconque des revendications 24 à 30, comprenant en outre les étapes consistant à :
fournir un signal vocal codé, codé dans un format de codage de la parole ;
compresser le signal vocal codé selon un algorithme de compression, pour ainsi produire des données de message codées dans un format de données de message, le format de données de message étant plus compressé que le format de codage de la parole ; et
stocker les données de message compressées dans une mémoire, sous la forme d'un message vocal stocké.

32. Procédé d'extraction de messages vocaux selon la revendication 31, comprenant en outre les étapes consistant à :
convertir un signal acoustique vocal en un signal électrique vocal ;
coder le signal électrique vocal au moyen d'un algorithme de codage de la parole, afin de produire ledit signal vocal codé, codé dans un format de codage de la parole.

33. Procédé d'extraction de messages vocaux selon la revendication 21, destiné à être utilisé avec un dispositif de communication, comprenant en outre l'étape consistant à :
recevoir un signal vocal codé émis, codé dans un format de codage de la parole.

34. Procédé d'extraction de messages vocaux selon l'une quelconque des revendications 31 à 33, dans lequel l'algorithme de compression comprend l'étape consistant à :
éliminer i trames de données sur j trames de données, une trame de données comprenant un nombre prédéterminé de bits binaires, i et j étant des entiers et j étant plus grand que i.

35. Procédé d'extraction de messages vocaux selon l'une quelconque des revendications 31 à 33, dans lequel l'algorithme de compression comprend l'étape consistant à :
éliminer k bits sur 1 bits de chaque trame de données, une trame de données comprenant un nombre prédéterminé de bits binaires, k et 1 étant des entiers et 1 étant plus grand que k.

36. Procédé d'extraction de messages vocaux selon l'une quelconque des revendications 31 à 35, dans lequel le signal vocal codé selon le format de codage de la parole comprend au moins deux ensembles de données correspondant à des niveaux de priorité prédéfinis, et dans lequel l'algorithme de compression comprend en outre l'étape consistant à :
éliminer au moins l'ensemble de données correspondant au niveau de priorité le plus bas.

37. Procédé d'extraction de messages vocaux selon l'une quelconque des revendications 31 et 33, dans lequel l'algorithme de compression exécute l'algorithme de Ziv-Lempel ou de Huffman.
